# DEMANDE DE BREVET EUROPEEN

(11) **EP 1 570 974 A2**
(43) Date de publication de la demande: **07.09.2005**
(21) Numéro de dépôt: 05290399.4
(22) Date de dépôt: 22.02.2005
(51) Int. Cl.: B29C 63/02, B29C 65/16

(54) **Procédé de placage d'une couche souple sur un élément rigide et procédé de décoration dudit élément rigide**

(30) Priorité: 01.03.2004 FR 0450392
(71) Demandeur: Centre d'Etude et de Recherche pour l'Automobile ( CERA), 51100 Reims (FR)
(72) Inventeur: Noirot, Daniel, 02350 Liesse Notre Dame (FR)
(74) Mandataire: Geismar, Thierry

(57) **Abrégé**

L'invention concerne un procédé de placage d'une couche (2) souple et étanche sur un élément (3) sensiblement rigide et étanche au moyen d'un dispositif de placage (1) comprenant un cadre d'appui périphérique (4), ledit procédé étant caractérisé en ce qu'il comprend les étapes suivantes :
- disposer la périphérie de l'élément rigide (3) en appui sur le cadre d'appui périphérique (4) ;
- assurer l'étanchéité entre la périphérie (5) de l'élément rigide (3) et le cadre d'appui (4) ;
- disposer sur l'élément (3) la couche souple (2), la périphérie (10) de ladite couche étant en appui sur le cadre d'appui (4) au-delà de la périphérie (5) de l'élément (3) ;
- assurer l'étanchéité entre la périphérie (10) de la couche souple (2) et le cadre d'appui (4), de sorte à créer un espace (13) délimité par le cadre d'appui (4), la couche souple (2) et l'élément rigide (3) ;
- créer une dépression dans l'espace (13).

L'invention concerne également un procédé de décoration dudit élément (3).

## Description

L'invention concerne un procédé de placage d'une couche souple et étanche sur un élément rigide et étanche, ainsi qu'un procédé de décoration de l'élément rigide au moyen d'un tel procédé de placage.

Il est connu de décorer un élément rigide et étanche en associant par exemple une couche de revêtement ou en transférant des motifs à base d'encres sur une face de cet élément. De tels procédés de décoration sont couramment mis en oeuvre pour la décoration de produits tels que des composants de garnissage intérieur de véhicules automobiles.

De tels composants comprennent généralement un élément structurel, par exemple en matière plastique injectée, ledit élément étant généralement mince, hormis en certaines zones fonctionnelles telles que des fixations moulées d'une pièce ou des nervures de renfort. Ils comprennent généralement une face externe, respectivement interne, destinée à être disposée face aux, respectivement à l'opposé des, usagers du véhicule.

Pour permettre une décoration harmonieuse et sans défaut de l'élément, il est nécessaire d'assurer un placage efficace de la couche de revêtement ou d'une couche comprenant les motifs à base d'encres sur la face de l'élément.

Divers procédés de placage ont été envisagés afin de pouvoir réaliser cette association.

Il est connu, par exemple du document FR-2 815 286, de disposer l'élément sur une surface d'appui dont la forme est adaptée à celle de l'élément puis de plaquer la couche sur l'élément en appliquant une pression sur la couche, au moyen d'une pellicule plaquée par pression ou dépression sur ladite couche.

La surface d'appui permet d'éviter toute déformation de l'élément, durant la mise en oeuvre du procédé, qui risquerait d'entraîner des défectuosités géométriques sur le composant fini.

Cependant, un tel procédé est peu avantageux car il nécessite de prévoir une surface d'appui spécifique aux différentes formes d'éléments que l'on souhaite décorer. Par conséquent, toute modification de la forme de l'élément oblige à prévoir une nouvelle surface d'appui, ce qui entraîne une augmentation des coûts et une diminution de la cadence de production des composants finis.

De plus, il peut être nécessaire de chauffer l'élément que l'on souhaite décorer, par exemple pour assurer une bonne pénétration de motifs à base d'encre dans le support. Or, une surface d'appui étendue sous toute la surface de l'élément nuit à la bonne répartition des températures au sein du support.

Pour pallier cet inconvénient, il a été proposé de réduire la surface d'appui afin que seule la périphérie de l'élément soit en appui sur un dispositif de placage. De la sorte, la surface d'appui spécifique est limitée à la seule périphérie de l'élément. La couche est ensuite disposée sur l'élément et est plaquée sur celui-ci par aspiration au moyen d'un tirage sous vide réalisé sous l'élément dans l'espace laissé libre par la réduction de la surface d'appui.

Cependant, ce procédé fait perdre les avantages de la surface d'appui étendue sous l'élément. En effet, le vide créé sous l'élément peut entraîner une déformation de celui-ci, une partie de l'élément étant aspirée vers le bas tandis que sa périphérie est en appui sur le dispositif de placage. Cela peut entraîner une détérioration de l'élément ou un plaquage imparfait et irrégulier de la couche sur l'élément et ainsi créer des défectuosités géométriques sur le composant fini.

L'invention vise à pallier ces inconvénients en proposant un procédé de plaquage d'une couche souple sur un élément rigide dans lequel l'élément est en appui sur un dispositif de plaquage au moyen de sa seule périphérie et dans lequel la couche est plaquée sur l'élément par un tirage sous vide réalisé entre l'élément et la couche souple.

A cet effet et selon un premier aspect, l'invention concerne un procédé de placage d'une couche souple et étanche sur un élément sensiblement rigide et étanche au moyen d'un dispositif de placage comprenant un cadre d'appui périphérique, ledit procédé comprenant les étapes suivantes :
- disposer la périphérie de l'élément rigide en appui sur le cadre d'appui périphérique ;
- assurer l'étanchéité entre la périphérie de l'élément rigide et le cadre d'appui ;
- disposer sur l'élément la couche souple, la périphérie de ladite couche étant en appui sur le cadre d'appui au-delà de la périphérie de l'élément ;
- assurer l'étanchéité entre la périphérie de la couche souple et le cadre d'appui, de sorte à créer un espace délimité par le cadre d'appui, la couche souple et l'élément rigide ;
- créer une dépression dans l'espace.

De la sorte, la surface d'appui spécifique est limitée à la seule périphérie de l'élément et toute déformation de l'élément est empêchée, celui-ci n'étant pas sollicité par le tirage sous vide.

De plus, la surface d'envers de l'élément, hormis sur sa périphérie, est directement accessible, par exemple pour le passage d'un faisceau laser destiné à réaliser une soudure.

On supprime également les effets néfastes de la surface d'appui étendue en ce qui concerne la répartition des températures au sein de l'élément dans le cas où celui-ci doit être chauffé.

Selon un deuxième aspect, l'invention concerne un procédé de décoration d'un élément permettant d'associer à l'élément un revêtement d'aspect étanche tel qu'une peau en matière plastique ou en cuir ou de transférer des motifs à base d'encres sur une face de cet élément.

Selon un premier mode de réalisation du procédé de décoration, celui-ci comprend, outre les étapes du procédé de placage décrit ci-dessus, les étapes suivantes :
- souder thermiquement la couche souple à l'élément rigide ;
- arrêter la dépression de sorte à retirer l'élément décoré par la couche souple.

Selon une variante du procédé décrit ci-dessus, on prévoit de disposer une couche intermédiaire de revêtement non étanche, tel qu'un textile poreux, entre l'élément rigide et la couche souple. Ainsi, le placage de la couche souple entraîne celui de la couche intermédiaire et on obtient un élément décoré par cette couche intermédiaire.

Selon un deuxième mode de réalisation du procédé de décoration, la couche souple comprend des motifs à base d'encres transférables à chaud, lesdits motifs étant tournés vers l'élément, le procédé comprend alors, outre les étapes du procédé de placage, les étapes suivantes :
- chauffer l'élément et la couche souple à la température de transfert des encres ;
- arrêter la dépression de sorte à retirer l'élément décoré par les motifs à encres.

Selon une variante du procédé décrit ci-dessus, on prévoit une couche intermédiaire qui comprend les motifs à base d'encres transférables à chaud entre l'élément et la couche souple. Le placage de la couche souple entraîne alors celui de la couche intermédiaire, puis, par chauffage à la température de transfert des encres, on transfère les motifs sur l'élément.

D'autres objets et avantages de l'invention apparaîtront au cours de la description qui suit, faite en référence aux dessins annexés.

La figure 1 est une représentation schématique en coupe d'un élément rigide et d'une couche souple disposés sur un dispositif de placage illustrant le procédé de placage selon l'invention.

La figure 2 est une représentation schématique en coupe similaire à la figure 1, dans laquelle un faisceau laser permet de souder la couche souple à l'élément selon un premier mode de réalisation du procédé de décoration.

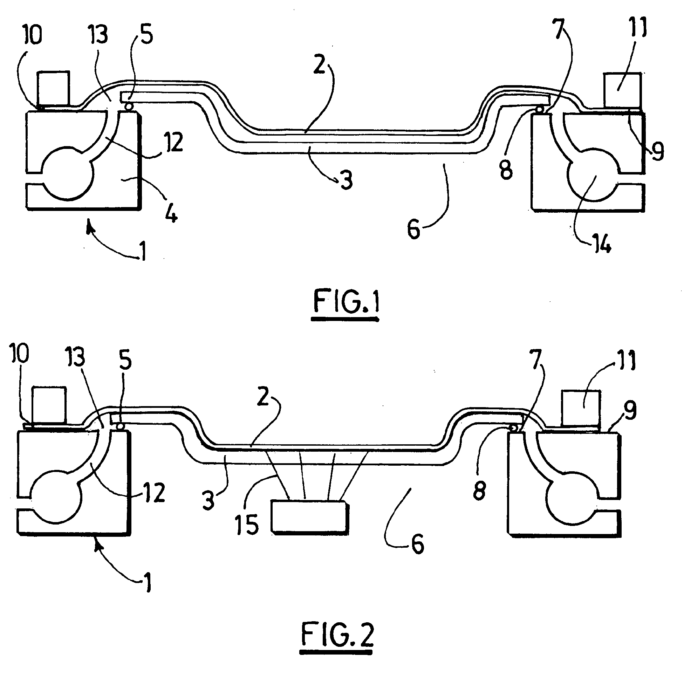

En référence à la figure 1, on décrit tout d'abord le dispositif de placage 1 permettant de plaquer une couche souple et étanche 2 sur un élément sensiblement rigide et étanche 3.

Par élément sensiblement rigide, on entend un élément dont la rigidité est très supérieure à celle de la couche souple, mais qui est susceptible de se déformer sous l'effet d'une contrainte telle qu'une aspiration sous vide. Il peut s'agir par exemple d'une structure en matière plastique fine.

Le dispositif de placage 1 comprend un cadre d'appui périphérique 4. Le cadre 4 est prévu pour recevoir en appui la périphérie 5 de l'élément 3 tout en ménageant un espace ouvert 6 sous le reste de l'élément 3.

L'appui de la périphérie 5 de l'élément 3 se fait sur une surface d'appui interne 7. La surface d'appui interne 7 est pourvue d'un joint 8 souple s'étendant sur l'intégralité de la surface d'appui interne 7 en regard de la périphérie 5 de l'élément 3. Ainsi, la périphérie 5 repose sur le joint 8, ce qui permet d'assurer l'étanchéité entre la périphérie 5 de l'élément rigide 3 et le cadre d'appui 4.

Le cadre périphérique 4 comprend en outre une surface d'appui externe 9, prévue pour recevoir la périphérie 10 de la couche souple 2. La surface d'appui externe 9 s'étend au delà de la périphérie 5 de l'élément 3 de sorte que lorsque la périphérie 10 de la couche 2 est en appui sur la surface d'appui externe 9, l'élément 3 est intégralement recouvert par la couche souple 2, comme représenté sur les figures.

Les surfaces d'appui interne 7 et externe 9 sont des surfaces continues situées en regard de toute la périphérie 5 de l'élément 3, respectivement de la couche souple 2.

Selon la réalisation représentée sur les figures, un cadre auxiliaire mobile 11 peut être prévu pour appuyer sur la périphérie 10 de la couche souple 2. Ce cadre auxiliaire 11 est situé en regard de la zone d'appui externe 9 et est agencé pour appliquer une pression sur la périphérie 10 lorsque celle-ci est disposée entre la surface d'appui externe 9 et le cadre auxiliaire 10. On assure ainsi l'étanchéité entre la périphérie 10 de la couche souple 3 et le cadre d'appui 4.

Selon une autre réalisation non représentée, l'étanchéité entre la périphérie 10 de la couche souple 2 et le cadre d'appui 4 est assurée par tirage sous vide de la périphérie 10 sur la surface d'appui externe 9. Pour ce faire, on peut prévoir que le cadre d'appui 4 soit pourvu de canaux dont une extrémité débouche dans la surface d'appui externe 9 et dont l'autre est relié à un dispositif de tirage sous vide. Ainsi les canaux permettent d'aspirer la périphérie 10 de la couche 3. De la sorte, on crée une dépression sous la périphérie 10 de la couche souple 3. Selon une réalisation, les canaux sont intégrés dans le cadre d'appui 4.

D'autres canaux 12 sont intégrés dans le cadre d'appui 4. L'une des extrémités de ces canaux 12 débouche entre la zone d'appui interne 7 et la zone d'appui externe 9. C'est à dire que les canaux sont en communication avec un espace 13 délimité par l'élément 3, la zone d'appui 7, la couche souple 2 et la zone d'appui 9. L'autre extrémité des canaux 12 est reliée à un dispositif de tirage sous vide (non représenté). Selon une application, le même dispositif de tirage sous vide est utilisé pour les canaux 12 et pour plaquer la périphérie 10 de la couche souple 2. Une chambre à vide 14 peut être prévue dans le cadre d'appui 4 entre les canaux 12 et le dispositif de tirage sous vide.

Dans le cas où un cadre auxiliaire 11 est prévu, celui-ci vient en appui sur la couche souple au-delà des canaux 12 de sorte que ceux-ci débouchent entre la périphérie 10 de la couche souple 2 et la périphérie 5 de l'élément 3.

On décrit maintenant le procédé de placage de la couche souple 2 sur l'élément rigide 3.

Dans une première étape du procédé, on dispose l'élément rigide et étanche 3 sur le cadre d'appui 4. C'est à dire que la périphérie 5 de l'élément 3 repose sur le joint 8, tandis que le reste de l'élément 3 se trouve dans l'espace 6.

La disposition sur le joint 8 assure l'étanchéité entre le cadre d'appui 4 et l'élément 3.

On dispose ensuite la couche souple et étanche 2 sur l'élément 3, la périphérie 10 de cette couche 2 étant en appui sur le cadre d'appui 4 au-delà de la périphérie 5 de l'élément 3, c'est à dire sur la zone d'appui externe 9. La couche souple et étanche 2 est par exemple une peau en matière plastique ou en cuir.

On assure l'étanchéité entre la périphérie 10 de la couche souple 2 et le cadre d'appui 4 en abaissant le cadre auxiliaire mobile 11 ou en tirant sous vide la couche souple 2 comme décrit précédemment. Un espace 13 délimité par le cadre d'appui 4, la couche souple 2 et l'élément rigide 3 est ainsi créé.

L'espace 13 est en communication avec les canaux 12 de sorte que lorsque l'on déclenche le dispositif de tirage sous vide, une dépression est créée dans l'espace 13.

La couche souple 2 et l'élément rigide 3 étant étanches, la dépression a pour effet de plaquer efficacement la couche souple 2 sur l'élément rigide 3. La couche souple 2 prend alors une forme complémentaire de celle de l'élément 3.

On prévoit que la couche souple, en se plaquant, ne bouche pas les canaux 12 de sorte à pouvoir maintenir la dépression dans l'espace 13. Ceci peut en particulier être assuré par le joint 8 qui crée un espace entre la couche souple 2 et les canaux 12.

Les étapes d'un tel procédé de placage peuvent notamment être utilisées pour décorer un élément 3 afin de former par exemple un composant de garnissage de l'habitacle d'un véhicule automobile.

Selon un premier mode de réalisation du procédé de décoration de l'élément 3, on réalise les étapes suivantes après les étapes du procédé de placage :
- souder thermiquement la couche souple à l'élément rigide ;
- arrêter la dépression de sorte à retirer l'élément décoré par la couche souple.

Le soudage thermique peut être réalisé au moyen d'au moins un faisceau laser 15, comme cela est représenté sur la figure 2. Le faisceau laser 15 est transmis au travers de la couche souple 2 ou de l'élément rigide 3. Dans ce cas, on prévoit que la couche souple 2 ou l'élément rigide 3 soient réalisés en un matériau transparent au laser.

Dans un mode de réalisation, on utilise au moins une diode laser qui peut être disposée dans l'espace 6 sous l'élément 3. On réalise ainsi un gain de place important. On peut envisager d'utiliser un faisceau laser que l'on déplace sous l'élément 3 ou plusieurs faisceaux répartis sous cet élément 3.

En particulier, on peut prévoit un réseau de faisceaux laser permettant de réaliser la soudure en plusieurs points régulièrement répartis sur l'élément rigide 3. Un tel réseau est par exemple décrit dans le document FR-03 05736.

Selon une variante non représentée du premier mode de réalisation, le soudage thermique peut être réalisé par chauffage de l'élément rigide 3 et de la couche souple 2 permettant d'assurer leur cohésion par fusion.

Selon une autre variante non représentée de ce mode de réalisation, on prévoit une couche intermédiaire de revêtement d'aspect, poreuse, disposée entre l'élément 3 et la couche souple 2. Le plaquage de la couche souple 2 entraîne celui de la couche intermédiaire. Le procédé de décoration prévoit alors les étapes supplémentaires suivantes :
- disposer la couche intermédiaire de revêtement d'aspect sur l'élément rigide 3 préalablement à la disposition de la couche souple 2 ;
- souder la couche intermédiaire de revêtement sur l'élément 3 au moyen d'au moins un faisceau laser après la création de la dépression ;
- arrêter la dépression de sorte à retirer l'élément 3 décoré par la couche intermédiaire de revêtement.

Une étape supplémentaire consiste à retirer la couche souple 2, celle-ci ayant pour fonction le placage de la couche intermédiaire qui est associée à l'élément 3 de sorte à décorer celui-ci.

La couche intermédiaire peut être une couche de matériau textile. Cette couche est suffisamment déformable sous l'effet du tirage sous vide pour pouvoir être plaquée efficacement contre l'élément 3, quelle que soit la forme de ce dernier.

Selon un deuxième mode de réalisation du procédé de décoration, la couche souple 2 comprend des motifs à base d'encres transférables à chaud, lesdits motifs étant tournés vers l'élément, le procédé comprend alors, en outre des étapes du procédé de placage, les étapes suivantes :
- chauffer l'élément 3 et la couche souple 2 à la température de transfert des encres ;
- arrêter la dépression de sorte à retirer l'élément 3 décoré par les motifs à encres.

La couche souple 2 est donc une couche de transfert des motifs à base d'encres, elle est ensuite retirée de l'élément 3 afin de former l'élément 3 fini.

Le tirage sous vide permet d'assurer un bon placage de la couche 2 sur l'élément afin de transférer les motifs de façon précise, la couche 2 épousant la forme de l'élément 3.

Selon une variante de ce deuxième mode de réalisation, le procédé de décoration comprend les étapes suivantes, en outre de celles du procédé de placage :
- disposer une couche intermédiaire comprenant des motifs à base d'encres transférables à chaud sur l'élément rigide 3, les motifs étant tournés vers ledit élément, préalablement à la disposition de la couche souple 2 ;
- chauffer l'élément 3 et la couche intermédiaire à la température de transfert des encres après la création de la dépression ;
- arrêter la dépression de sorte à retirer l'élément 3 décoré par les motifs à encres.

Dans cette variante, on prévoit que la couche intermédiaire soit poreuse.

La couche intermédiaire peut être une couche de matériau textile, ce qui permet d'assurer un placage efficace de celle-ci contre l'élément 3. En effet, du fait de son élasticité, la couche intermédiaire épouse la forme de l'élément 3 et le transfert des motifs à base d'encres sur l'élément 3 est donc réalisé de façon particulièrement efficace.

Dans ce mode de réalisation, la couche souple 2 et la couche intermédiaire sont retirées de l'élément 3 après l'arrêt de la dépression. On obtient ainsi un élément 3 fini décoré par des motifs à base d'encres.

Dans tous les cas, le procédé de décoration de l'élément 3 peut se terminer par une étape de finition. Cette étape consiste par exemple à remborder la couche de revêtement d'aspect avec la périphérie 5 de l'élément 3. Ainsi on peut réaliser une découpe de la périphérie 10 de la couche souple 2 afin de la faire correspondre avec la périphérie 5 de l'élément 3.

Le procédé de décoration décrit ci-dessus permet de décorer des éléments 3 présentant des formes complexes. En effet, l'utilisation d'un tirage sous vide pour plaquer une couche souple permet d'assurer un placage efficace de la couche souple qui épouse la forme de l'élément, quelle que soit la géométrie de ce dernier.

## Revendications

1. Procédé de placage d'une couche (2) souple et étanche sur un élément (3) sensiblement rigide et étanche au moyen d'un dispositif de placage (1) comprenant un cadre d'appui périphérique (4), ledit procédé étant **caractérisé en ce qu'**il comprend les étapes suivantes :
- disposer la périphérie de l'élément rigide (3) en appui sur le cadre d'appui périphérique (4) ;
- assurer l'étanchéité entre la périphérie (5) de l'élément rigide (3) et le cadre d'appui (4) ;
- disposer sur l'élément (3) la couche souple (2), la périphérie (10) de ladite couche étant en appui sur le cadre d'appui (4) au-delà de la périphérie (5) de l'élément (3) ;
- assurer l'étanchéité entre la périphérie (10) de la couche souple (2) et le cadre d'appui (4), de sorte à créer un espace (13) délimité par le cadre d'appui (4), la couche souple (2) et l'élément rigide (3) ;
- créer une dépression dans l'espace (13).

2. Procédé de placage selon la revendication 1, **caractérisé en ce que** l'étanchéité entre la périphérie (5) de l'élément rigide (3) et le cadre d'appui (4) est assurée en disposant l'élément rigide (3) sur un joint (8) prévu sur le cadre d'appui (4).

3. Procédé de placage selon la revendication 1 ou 2, **caractérisé en ce que** l'étanchéité entre la couche souple (2) et le cadre d'appui (4) est assurée par un appui de la périphérie (10) de la couche souple (2) contre le cadre d'appui (4).

4. Procédé de placage selon la revendication 3, **caractérisé en ce que** l'appui de la périphérie de la couche souple (2) est réalisé au moyen d'un cadre auxiliaire mobile (11), la périphérie (10) de la couche souple (2) étant disposée entre le cadre auxiliaire (11) et le cadre d'appui (4).

5. Procédé de placage selon la revendication 3, **caractérisé en ce que** l'appui de la périphérie (10) de la couche souple (2) est réalisé au moyen d'un dispositif de placage sous vide débouchant sous la périphérie (10) de la couche souple (2) au travers du cadre d'appui (4).

6. Procédé de placage selon l'une quelconque des revendications 1 à 5, **caractérisé en ce que** la dépression dans l'espace (13) est créée par aspiration au moyen d'un dispositif de tirage sous vide débouchant dans l'espace (13) au travers du cadre d'appui (4).

7. Procédé de décoration d'un élément étanche et rigide (3) comprenant les étapes du procédé de placage selon l'une des revendications 1 à 6, ledit procédé de décoration étant **caractérisé en ce qu'**il comprend en outre les étapes ultérieures suivantes :
- souder thermiquement la couche souple (2) à l'élément rigide (3) ;
- arrêter la dépression de sorte à retirer l'élément (3) décoré par la couche souple (2).

8. Procédé de décoration selon la revendication 7, **caractérisé en ce que** la couche souple (2) est soudée à l'élément rigide (3) au moyen d'au moins un faisceau laser (15) transmis au travers de la couche souple (2) ou de l'élément rigide (3).

9. Procédé de décoration selon la revendication 7, **caractérisé en ce que** la couche souple (2) est soudée à l'élément rigide (3) par chauffage de l'élément rigide (3) et de la couche souple (2) permettant d'assurer leur cohésion par fusion.

10. Procédé de décoration d'un élément étanche et rigide (3) comprenant les étapes du procédé de placage selon l'une des revendications 1 à 6, ledit procédé de décoration étant **caractérisé en ce qu'**il comprend en outre les étapes suivantes :
- disposer une couche intermédiaire de revêtement d'aspect sur l'élément rigide (3) préalablement à la disposition de la couche souple (2) ;
- souder la couche intermédiaire de revêtement sur l'élément (3) au moyen d'au moins un faisceau laser (15) après la création de la dépression ;
- arrêter la dépression de sorte à retirer l'élément (3) décoré par la couche intermédiaire de revêtement.

11. Procédé de décoration d'un élément étanche et rigide (3) au moyen d'une couche souple (2) comprenant des motifs à base d'encres transférables à chaud, lesdits motifs étant tournés vers l'élément, ledit procédé comprenant les étapes du procédé de placage selon l'une des revendications 1 à 6 et étant **caractérisé en ce qu'**il comprend les étapes ultérieures suivantes :
- chauffer l'élément (3) et la couche souple (2) à la température de transfert des encres ;
- arrêter la dépression de sorte à retirer l'élément (3) décoré par les motifs à encres.

12. Procédé de décoration d'un élément étanche et rigide (3) comprenant les étapes du procédé de placage selon l'une des revendications 1 à 6, ledit procédé de décoration étant **caractérisé en ce qu'**il comprend en outre les étapes suivantes :
- disposer une couche intermédiaire comprenant des motifs à base d'encres transférables à chaud sur l'élément rigide (3), les motifs étant tournés vers ledit élément, préalablement à la disposition de la couche souple (2) ;
- chauffer l'élément (3) et la couche intermédiaire à la température de transfert des encres après la création de la dépression ;
- arrêter la dépression de sorte à retirer l'élément (3) décoré par les motifs à encres.
